(19)

Europäisches
Patentamt
European
Patent Office
Office européen
des brevets

(11)  **EP 3 869 736 A1**

(12)  **EUROPEAN PATENT APPLICATION**
published in accordance with Art. 153(4) EPC

(43) Date of publication:
**25.08.2021 Bulletin 2021/34**

(21) Application number: **18938206.2**

(22) Date of filing: **06.12.2018**

(51) Int Cl.:
**H04L 12/24** *(2006.01)*

(86) International application number:
**PCT/CN2018/119599**

(87) International publication number:
**WO 2020/082518 (30.04.2020 Gazette 2020/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2018 CN 201811232186**

(71) Applicant: **Wangsu Science & Technology Co.,
Ltd.**
**Shanghai 201800 (CN)**

(72) Inventor: **YANG, Zhujue**
**Shanghai 201800 (CN)**

(74) Representative: **De Arpe Tejero, Manuel**
**Arpe Patentes y Marcas**
**Alcalá, 26, 5ª Planta**
**28014 Madrid (ES)**

(54) **METHOD AND DEVICE FOR IDENTIFYING BANDWIDTH DEMAND BURST**

(57)  The present disclosure provides a method and an apparatus for recognizing a surge in bandwidth demand, which belongs to the network communication technology field. The method includes: periodically obtaining historic bandwidth data of a target client at each standard time point in a plurality of historic cycles; generating a regular bandwidth template corresponding to each standard time point based on the historic bandwidth data; obtaining real time bandwidth data of the target client in every pre-set time interval; and based on the real time bandwidth data at each standard time point in a specified time interval and template bandwidth data of the regular bandwidth template in the specified time interval, determining whether the target client has a surge in bandwidth demand. The present disclosure timelier and more accurately recognizes the surge in bandwidth demand of the target client.

```
                                                              201
┌─────────────────────────────────────────────────────────┐
│ Periodically obtaining historic bandwidth data of a       │
│ target client at each standard time point in a plurality  │
│ of historic cycles                                        │
└─────────────────────────────────────────────────────────┘
                            │
                            ▼                                 202
┌─────────────────────────────────────────────────────────┐
│ Generating a regular bandwidth template corresponding     │
│ to each standard time point based on the historic         │
│ bandwidth data                                            │
└─────────────────────────────────────────────────────────┘
                            │
                            ▼                                 203
┌─────────────────────────────────────────────────────────┐
│ Obtaining real time bandwidth data of the target client   │
│ in every pre-set time interval                            │
└─────────────────────────────────────────────────────────┘
                            │
                            ▼                                 204
┌─────────────────────────────────────────────────────────┐
│ Based on the real time bandwidth data at each standard    │
│ time point in a specified time interval and template      │
│ bandwidth data of the regular bandwidth template in the   │
│ specified time interval, determining whether the target   │
│ client has a surge in bandwidth demand                    │
└─────────────────────────────────────────────────────────┘
```

FIG. 2

EP 3 869 736 A1

## Description

FIELD OF THE DISCLOSURE

The present disclosure relates to the field of Internet technology, and more particularly, relates to a method and an apparatus for recognizing a surge in bandwidth demand.

BACKGROUND

To expedite a feedback speed to user accesses and ensure stability and high availability of service back-end system at the same time, most service providers use a content delivery network (CDN) acceleration service to support related business services. From the perspective of a CDN provider, the CDN provider often allocates a certain amount of CDN bandwidth resources for each service provider (hereinafter client) who subscribes the CDN acceleration service and uses the allocated CDN bandwidth resources to provide the CDN acceleration service to businesses of each client.

Considering that most clients often have surges in bandwidth demand, in cases, for example, a client needs to promote a new service or provides a highly sought-after resource, the bandwidth demand of the client substantially increases. At this time, pre-allocated bandwidth resources are unable to satisfy the surge in bandwidth demand. It is likely that network delays increase substantially, and response speeds substantially decrease. Eventually, client's service quality deteriorates, causing loss of customers. Thus, a method for accurately and timely recognizing the surge in bandwidth demand is needed, such that the CDN providers may effectively allocate bandwidth resources based on the surge in bandwidth demand to ensure an overall service quality of the client.

BRIEF SUMMARY OF THE DISCLOSURE

To solve the problems in the existing technology, the present disclosure provides a method and an apparatus for recognizing a surge in bandwidth demand. The technical solution includes the following aspects.

One aspect of the present disclosure provides a method for recognizing a surge in bandwidth demand. The method includes: periodically obtaining historic bandwidth data of a target client at each standard time point in a plurality of historic cycles; generating a regular bandwidth template corresponding to each standard time point based on the historic bandwidth data; obtaining real time bandwidth data of the target client in every pre-set time interval; and based on the real time bandwidth data at each standard time point in a specified time interval and template bandwidth data of the regular bandwidth template in the specified time interval, determining whether the target client has the surge in bandwidth demand.

Optionally, after obtaining the real time bandwidth data of the target client in every pre-set time interval, the method further includes: if the real time bandwidth data obtained in any pre-set time interval misses the real time bandwidth data at a target time point, using a linear interpolation algorithm to calculate the real time bandwidth data at the target time point based on the real time bandwidth data at time points adjacent to the target time point.

Optionally, after obtaining the real time bandwidth data of the target client in every pre-set time interval, the method further includes: determining a bandwidth change rate of the real time bandwidth data obtained in a latest pre-set time interval based on the real time bandwidth data obtained in a preceding pre-set time interval; if the bandwidth change rate is greater than a pre-set change threshold and a count of consecutive abrupt bandwidth changes is smaller than a pre-set count threshold, updating the real time bandwidth data obtained in the latest pre-set time interval with the real time bandwidth data obtained in the preceding pre-set time interval and incrementing the count of the consecutive abrupt bandwidth changes by one; and if the bandwidth change rate is not greater than the pre-set change threshold or the count of the consecutive abrupt bandwidth changes is not smaller than the pre-set count threshold, adjusting the real time bandwidth data obtained in the latest pre-set time interval according to the real time bandwidth data obtained in the preceding pre-set time interval and resetting the count of the consecutive abrupt bandwidth changes to zero.

Optionally, generating the regular bandwidth template corresponding to each standard time point based on the historic bandwidth data includes: for every two historic cycles in the plurality of historic cycles, determining a sum of differences between the historic bandwidth data in the two historic cycles of all standard time points to be a distance between the two historic cycles; each historic cycle being an initial cluster, using a single-linkage Hierarchical Clustering algorithm to gradually merge two clusters having a smallest distance; a target cluster being a merged cluster when the number of the historic cycles included in the merged cluster exceeds a pre-set number, determining all the historic cycles included in the target cluster to be target historic cycles; and based on averages of the historic bandwidth data in the target historic cycles at each standard time point, creating the regular bandwidth template corresponding to each standard time point.

Optionally, determining whether the target client has the surge in bandwidth demand based on the real time bandwidth data in the specified time interval at each standard time point and template bandwidth data of the regular bandwidth template in the specified time interval includes: calculating a sum of the real time bandwidth data at all the standard time points in the specified time interval, and calculating a sum of the template bandwidth data of the regular bandwidth template in the specified time interval; and based on a ratio of the sum of the real time bandwidth data over the sum of the template bandwidth data and a pre-set surge warning ratio or proportion, determining whether the client has the surge in bandwidth demand.

Optionally, determining whether the client has the surge in bandwidth demand based on the ratio of the sum of the real time bandwidth data over the sum of the template bandwidth data and the pre-set surge warning ratio includes: obtaining peak template bandwidth data of the template bandwidth data and current bandwidth data at a current time point; establishing a surge standard ratio through a ratio of the current bandwidth data over the peak template bandwidth data and the pre-set surge warning ratio or proportion; and if the ratio of the sum of the real time bandwidth data over the sum of the template bandwidth data is greater than the surge standard ratio, and the current bandwidth data is greater than a pre-set surge bandwidth minimum value, determining that the target client currently has the surge in bandwidth demand.

Optionally, the method further includes: after it is determined last time that the target client has the surge in bandwidth demand, if the ratio of the sum of the real time bandwidth data over the sum of the template bandwidth data is smaller than a pre-set surge warning dismissal ratio or porportion, or the current bandwidth data is smaller than the pre-set surge bandwidth minimum value, or the current bandwidth data is smaller than one half of the peak template bandwidth data, determining that the surge in bandwidth demand of the target client is over.

Optionally, after obtaining the real time bandwidth data of the target client in every pre-set time interval, the method further includes: dividing the real time bandwidth data according to each standard time point; and updating and storing the real time bandwidth data at each standard time point in an ascending order by accumulating the real time bandwidth data at a preceding standard time point to the real time bandwidth data at the standard time point.

Another aspect of the present disclosure provides an apparatus for recognizing a surge in bandwidth demand. The apparatus includes: a first acquisition module configured to periodically obtain historic bandwidth data at each standard time point in a plurality of historic cycles; a generation module configured to generate a regular bandwidth template corresponding to each standard time point based on the historic bandwidth data; a second acquisition module configured to obtain the real time bandwidth data of the target client in every pre-set time interval; and a determination module configured to determine whether the target client has the surge in bandwidth demand based on the real time bandwidth data at each standard time point in a specified time interval and template bandwidth data of the regular bandwidth template in the specified time interval.

Optionally, the apparatus further includes a data interpolation module configured to: if the real time bandwidth data obtained in any pre-set time interval misses the real time bandwidth data at a target time point, use a linear interpolation algorithm to calculate the real time bandwidth data at the target time point based on the real time bandwidth data at time points adjacent to the target time point.

Optionally, the apparatus further includes a data smoothing module configured to: determine a bandwidth change rate of the real time bandwidth data obtained in a latest pre-set time interval based on the real time bandwidth data obtained in a preceding pre-set time interval,; if the bandwidth change rate is greater than a pre-set change threshold and a count of consecutive abrupt bandwidth changes is smaller than a pre-set count threshold, update the real time bandwidth data obtained in the latest pre-set time interval with the real time bandwidth data obtained in the preceding pre-set time interval and increment the count of the consecutive abrupt bandwidth changes by one; and if the bandwidth change rate is not greater than the pre-set change threshold or the count of the consecutive abrupt bandwidth changes is not smaller than the pre-set count threshold, adjust the real time bandwidth data obtained in the latest pre-set time interval according to the real time bandwidth data obtained in the preceding pre-set time interval, and reset the count of the consecutive abrupt bandwidth changes to zero.

Optionally, the generation module is further configured to: for every two historic cycles in the plurality of historic cycles, determine a sum of differences between the historic bandwidth data in the two historic cycles of all standard time points to be a distance between the two historic cycles; each historic cycle being an initial cluster, use a single-linkage Hierarchical Clustering algorithm to gradually merge two clusters having a smallest distance; a target cluster being a merged cluster when the number of the historic cycles included in the merged cluster exceeds a pre-set number, determine all the historic cycles included in the target cluster to be target historic cycles; and based on averages of the historic bandwidth data in the target historic cycles at each standard time point, create the regular bandwidth template corresponding to each standard time point.

Optionally, the determination module is further configured to: calculate a sum of the real time bandwidth data at all the standard time points in the specified time interval, and calculate a sum of the template bandwidth data of the regular bandwidth template in the specified time interval; and based on a ratio of the sum of the real time bandwidth data over the sum of the template bandwidth data and a pre-set surge warning ratio or proportion, determine whether the client has the surge in bandwidth demand.

Optionally, the determination module is further configured to: obtain peak template bandwidth data of the template bandwidth data and current bandwidth data at a current time point; establish a surge standard ratio through a ratio of the current bandwidth data over the peak template bandwidth data and the pre-set surge warning ratio or proportion; and if the ratio of the sum of the real time bandwidth data over the sum of the template bandwidth data is greater than the surge standard ratio, and the current bandwidth data is greater than a pre-set surge bandwidth minimum value, determine that the target client currently has the surge in bandwidth demand.

Optionally, the apparatus further includes an auxiliary determination module configured to: after it is determined last time that the target client has the surge in bandwidth demand, if the ratio of the sum of the real time bandwidth data over the sum of the template bandwidth data is smaller than a pre-set surge warning dismissal ratio or proportion, or the current bandwidth data is smaller than the pre-set surge bandwidth minimum value, or the current bandwidth data is smaller than one half of the peak template bandwidth data, determine that the surge in bandwidth demand of the target client is over.

Optionally, the apparatus further includes an updating module configured to: divide the real time bandwidth data according to each standard time point; and update and store the real time bandwidth data at each standard time point in an ascending order by accumulating the real time bandwidth data at a preceding standard time point to the real time bandwidth data at the standard time point.

Another aspect of the present disclosure provides a client management device. The client management device includes: a processor; and a memory configured to store at least one instruction, at least one section of program, a code set, or an instruction set. The at least one instruction, the at least one section of program, the code set, or the instruction set stored in the memory are loaded and executed by the processor to implement the disclosed method for recognizing the surge in bandwidth demand.

Another aspect of the present disclosure provides a computer readable storage medium. The storage medium stores at least one instruction, at least one section of program, a code set, or an instruction set. The at least one instruction, the at least one section of program, the code set, or the instruction set are loaded and executed by a processor to implement the disclosed method for recognizing the surge in bandwidth demand.

In the embodiments of the present disclosure, the historic bandwidth data of the target client is periodically obtained at each standard time point in a plurality of historic cycles. The regular bandwidth template corresponding to each standard time point is generated based on the historic bandwidth data. The real time bandwidth data of the target client in every pre-set time interval is obtained. Based on the real time bandwidth data at each standard time point in the specified time interval and the template bandwidth data of the regular bandwidth template in the specified time interval, whether the target client has the surge in bandwidth demand is determined. As such, cyclical characteristics of the bandwidth usage of the target client is mined based on the big data analysis. The regular bandwidth templates are created for different clients at different time points. The latest real time bandwidth data in combination with the regular bandwidth templates are used to timelier and more accurately recognize the surges in bandwidth demand of the clients. Thus, the bandwidth resources are scheduled more effectively in response to the surges in bandwidth demand, and the overall service quality for the clients is ensured.

BRIEF DESCRIPTION OF THE DRAWINGS

In order to more clearly illustrate the technical solutions in the embodiments of the present disclosure, drawings used in the description of the embodiments will be briefly described below. The drawings in the following description are only some embodiments of the present disclosure. Other drawings may also be obtained by those of ordinary skill in the art without inventive work.

FIG. 1 illustrates a block diagram of an exemplary CDN system architecture according to disclosed embodiments of the present disclosure;

FIG. 2 illustrates a flowchart of an exemplary method for recognizing a surge in bandwidth demand according to disclosed embodiments of the present disclosure;

FIG. 3 illustrates a schematic diagram of an exemplary apparatus for recognizing the surge in bandwidth demand according to disclosed embodiments of the present disclosure; and

FIG. 4 illustrates a schematic diagram of an exemplary client management device according to disclosed embodiments of the present disclosure.

DETAILED DESCRIPTION

To make the objectives, technical solutions, and advantages of the present disclosure clearer, the following further describes the embodiments of the present disclosure in details with reference to the accompanying drawings.

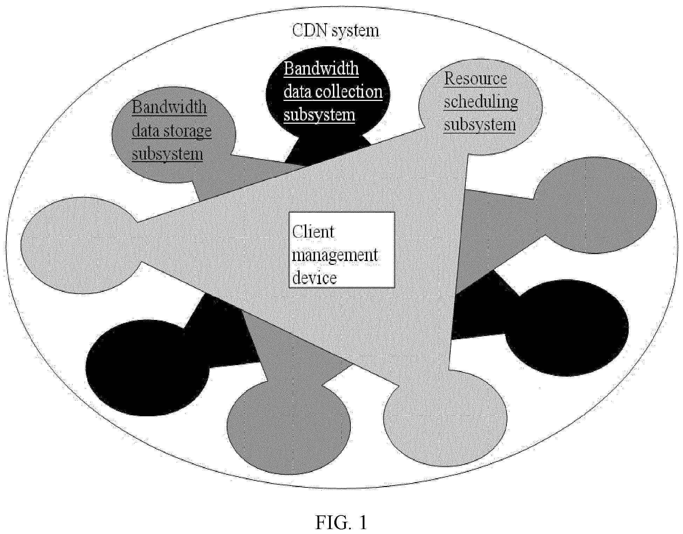

The present disclosure provides a method for recognizing a surge in bandwidth demand. The method may be applied to a CDN system and may be implemented by a client management device in the CDN system. The client management device may be a device in the CDN system, that manages bandwidth demands for clients subscribing a CDN acceleration service. The client management device obtains client's bandwidth data to recognize whether a surge in bandwidth demand occurs and guides a resource scheduling subsystem in the CDN system to schedule bandwidth resources. At the same time, the CDN system also includes a bandwidth data collection subsystem. The client management device obtains the client's bandwidth data in real time from the bandwidth data collection subsystem. In addition, the CDN system also includes a bandwidth data storage subsystem. The bandwidth data storage subsystem is configured to store the client's bandwidth data collected by the bandwidth data collection subsystem and to provide the stored bandwidth data to the client management device. FIG. 1 illustrates a block diagram of an exemplary CDN system architecture according to disclosed embodiments of the present disclosure. The bandwidth data collection subsystem and the bandwidth data storage subsystem are deployed in the CDN system in a distributed architecture to facilitate the collection and storage of the bandwidth data. The client management device may include a processor, a memory, and a transceiver. The processor is configured to perform a process of recognizing the surge in bandwidth demand. The memory is configured to store data required in the process and data generated in the process. The transceiver is configured to receive and transmit data related to the process.

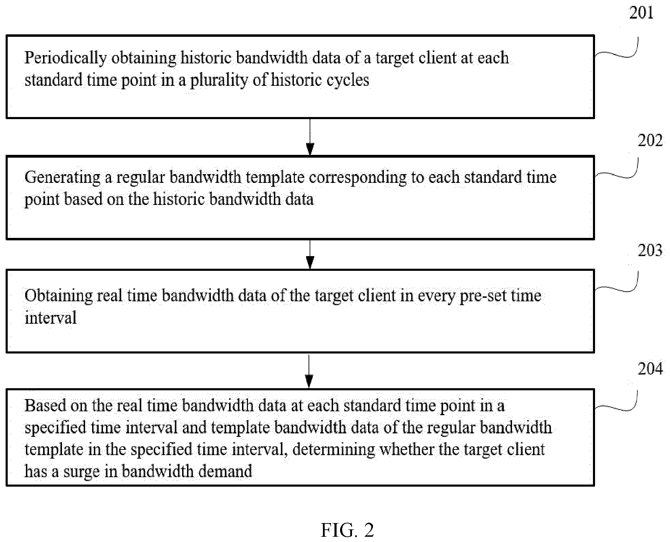

FIG. 2 illustrates a flowchart of an exemplary method for recognizing a surge in bandwidth demand according to disclosed embodiments of the present disclosure. As shown in FIG. 2, the method includes the following steps.

Step 201: periodically obtaining historic bandwidth data of a target client at each standard time point in a plurality of historic cycles.

In one embodiment, the bandwidth data collection subsystem collects bandwidth data of the target client in real time at an interface between the target client and the CDN system and stores the collected real time bandwidth data in the bandwidth data storage subsystem. The client management device periodically obtains the historic bandwidth data of the target client at each standard time point in the plurality of historic cycles from the bandwidth data storage subsystem. The plurality of historic cycles and the standard time points are configured in advance by CDN system administrators. For example, the cyele may be 1 day and the standard time points may be time points corresponding to 5-minute marks. One cycle may include 288 standard time points, that is, 00:00, 00:05, 00:10, ..., 23:50, 23:55. When collecting the bandwidth data, the bandwidth data collection subsystem may collect in collection cycles at the standard time points or may collect in shorter collection cycles. When storing the bandwidth data, the bandwidth data collection system may store only the bandwidth data in each cycle at the standard time points or may store all collected bandwidth data. For example, the cycle is 1 day, and the standard time points are the time points corresponding to 5-minute marks. The client management device may collect daily in early morning the historic bandwidth data of N preceding days including 288 standard time points per day.

Step 202: generating a regular bandwidth template corresponding to each standard time point based on the historic bandwidth data.

In one embodiment, after obtaining the historic bandwidth data, the client management device may generate the regular bandwidth template corresponding to each standard time point based on the historic bandwidth data. A time length of the regular bandwidth template is a length of one historic cycle mentioned in step 201. The regular bandwidth template practically includes a plurality of template bandwidth data corresponding to each standard time point. The plurality of template bandwidth data are generated based on the historic bandwidth data in a plurality of historic cycles at each standard time point. Thus, each regular bandwidth template is applicable to one cycle. Different cycles may have different regular bandwidth templates.

In one embodiment, generating the regular bandwidth template may include the following process. For two historic cycles in the plurality of historic cycles, a sum of differences between the historic bandwidth data at all standard time points in the two historic cycles is determined to be a distance between the two historic cycles. Each historic cycle is considered as an initial cluster. A single-linkage clustering algorithm is used to gradually merge two clusters with the smallest distance. When the number of the historic cycles included in a merged cluster exceeds a pre-set number, the merged cluster is determined to be a target cluster and all the historic cycles included in the target cluster are target historic cycles. Based on the averages of the historic bandwidth data in the target historic cycles at each standard time point, the regular bandwidth template corresponding to each standard time point is created.

In one embodiment, after obtaining the historic bandwidth data in the plurality of historic cycles, for every two historic cycles in the plurality of historic cycles, the client management device may calculate the differences between the historic bandwidth data in the two historic cycles at the standard time points and sum the differences. The sum of the differences is determined to be the distance between the two historic cycles. That is, applying the Manhattan distance algorithm:

$$d(x,y) = \sum_{k=1}^{p} |x_k - y_k|$$

where *x, y are* any two historic cycles, k is a count identifier of the standard time points in a historic cycle, and *p* is the number of the standard time points in each historic cycle. For example, a gap between two standard time points is 5 minutes. The count identifier for "00:00" is 1. The count identifier for "00:05" is 2. So on so forth. *p* is equal to 288. $x_k$ and $y_k$ are historic bandwidth data in the two historic cycles at k-th standard time point. *d(x,y)* is the distance between the two historic cycles x,y.

In the next step, the client management device may apply a single-linkage Hierarchical Clustering algorithm to the initial clusters of each historic cycle to gradually merge two clusters having a smallest distance. For example, 5 historic cycles are A, B, C, D, and E. The distances between any two historic cycles are listed in the following table.

|   | A | B | C | D | E |
|---|---|---|---|---|---|
| A | 0 | 1 | 2 | 4 | 6 |
| B | 1 | 0 | 3 | 2 | 5 |
| C | 2 | 3 | 0 | 4 | 4 |
| D | 4 | 2 | 4 | 0 | 3 |
| E | 6 | 5 | 4 | 3 | 0 |

As such, the initial clusters are d(A), d(B), d(C), d(D), and d(E). In the next step, two clusters having the distance 1 are merged. That is, d(A) and d(B) are merged. After the merge, the remaining clusters are d(A,B), d(C), d(D), and d(E). In the next step, two clusters having the distance 2 are merged. That is, d(A,B), d(C), and d(D) are merged. After the merge, the remaining clusters are d(A,B,C,D) and d(E). In the single-linkage clustering algorithm, the distance between d(A,B) and d(C) is the smallest of the distance 2 between d(A) and d(C) and the distance 3 between d(B) and d(C). Similarly, the distance between d(A,B) and d(D) is the smallest of the distance 4 between d(A) and d(D) and the distance 2 between d(B) and d(D).

In this way, when the number of the historic cycles included in the merged cluster exceeds the pre-set number, the merged cluster is determined to be the target cluster and all the historic cycles included in the target cluster are determined to be the target historic cycles. Then, the averages of the historic bandwidth data in the target historic cycles are calculated at the standard time points. Based on the averages, the regular bandwidth template corresponding to each standard time point is created.

Step 203: obtaining real time bandwidth data of the target client in every pre-set time interval.

In one embodiment, while the bandwidth data collection subsystem collects the bandwidth data of the target client in real time, the client management device may obtain the real time bandwidth data of the target client from the bandwidth data collection subsystem in the pre-set time interval. The pre-set time interval may be determined by the CDN administrators. The pre-set time interval may coincide with the standard time points or may be set to other time intervals. For example, the time interval at the standard time points is 5 minutes. The pre-set time may be 5 minutes or may be 3 minutes or 7 minutes. The real time bandwidth data may be obtained directly from the bandwidth data collection subsystem without waiting for the bandwidth data being stored in the bandwidth data storage subsystem and then obtaining from the bandwidth data storage subsystem. As such, the timeliness of the real time bandwidth data is ensured and the surge in bandwidth demand can be recognized timely. In addition, the real time bandwidth data obtained in this step may only include the real time bandwidth data in the pre-set time interval at the standard time points or may also include the real time bandwidth data at other time points.

In one embodiment, the client management device may perform a data adjustment process to the obtained real time bandwidth data to more accurately recognize the surge in bandwidth demand. The present disclosure provides two processes for supplementing missing data process and smoothing noisy data.

The process of supplementing missing data includes the following steps. If the real time bandwidth data obtained in the pre-set time interval misses the real time bandwidth data at a target time point, a linear interpolation algorithm is used to calculate the real time bandwidth data at the target time point based on the real time bandwidth data at time points adjacent to the target time point.

In one embodiment, after obtaining the real time bandwidth data in the pre-set time interval, the client management device may traverse all obtained real time bandwidth data to determine whether missing data occurs. If the bandwidth data at the target time point is missing, the real time bandwidth data at the time points adjacent to the target time point is obtained. Then, the linear interpolation algorithm is used to calculate the real time bandwidth data at the target time point. Referring to the formula below:

$$s = \frac{s_0(t_1 - t) + s_1(t - t_0)}{(t_1 - t_0)}$$

where $t$ is the target time point between the adjacent time points $t_0$ and $t_1$, $s_0$ is the real time bandwidth data at the time point $t_0$, $s_1$ is the real time bandwidth data at the time point $t_1$, and $s$ is the missing real time bandwidth data.

The process of smoothing noisy data includes the following steps. The real time bandwidth data obtained in a preceding pre-set time interval is used to determine a bandwidth change rate of the real time bandwidth data obtained in a latest pre-set time interval. If the bandwidth change rate of the real time bandwidth data is greater than a pre-set change threshold and a count of consecutive abrupt bandwidth changes is smaller than a pre-set count threshold, the real time bandwidth data obtained in the latest pre-set time interval is updated to the real time bandwidth data obtained in the preceding pre-set time interval and the count of the consecutive abrupt bandwidth changes is incremented by one. If the bandwidth change rate of the real time bandwidth data is not greater than the pre-set change threshold or the count of the consecutive abrupt bandwidth changes is not smaller than the pre-set count threshold, the real time bandwidth data obtained in the latest pre-set time interval is adjusted according to the real time bandwidth data obtained in the preceding pre-set time interval and the count of the consecutive abrupt bandwidth changes is reset to zero.

In one embodiment, after obtaining the real time bandwidth data at the pre-set time interval, the client management device may retrieve the real time bandwidth data obtained in the preceding pre-set time interval. Then, the bandwidth change rate of the real time bandwidth data obtained in the latest pre-set time interval is determined: bandwidth change rate = | new real time bandwidth data — preceding real time bandwidth data | / preceding real time bandwidth data. If the bandwidth change rate is greater than the pre-set change threshold, the bandwidth data of the target client changes abruptly either due to a substantial noise or due to a surge in bandwidth demand. Further, the client management device may determine whether the recorded count of the consecutive abrupt bandwidth changes is smaller than the pre-set count threshold. If true, it is believed that the abrupt bandwidth data change is caused by the substantial noise and the real time bandwidth data obtained in the latest pre-set time interval is updated to the real time bandwidth data obtained in the preceding pre-set time interval. At the same time, the recorded count of the consecutive abrupt bandwidth changes is incremented by one. If the count of the consecutive abrupt bandwidth change is not smaller than the pre-set count threshold, it is believed that the abrupt bandwidth data change is caused by the surge in bandwidth demand. The real time bandwidth data obtained in the latest pre-set time interval is adjusted according to the real time bandwidth data obtained in the preceding pre-set time interval and the count of the consecutive abrupt bandwidth changes is reset to zero. If the bandwidth change rate is not greater than the pre-set change threshold, the bandwidth data obtained in the latest pre-set time interval is directly subject to the smoothing process to eliminate the influence of potential insignificant noise. That is, the real time bandwidth data obtained in the latest pre-set time interval is adjusted according to the real time bandwidth data obtained in the preceding pre-set time interval and the count of the consecutive abrupt bandwidth changes is reset to zero. Referring to the following formula for an adjustment method:

$$S_t = \alpha \times Y_t + (1 - \alpha) \times S_{t-1}$$

where $Y_t$ is the real time bandwidth data at the time point t, the real time bandwidth data after the smooth adjustment is $S_t$, which is determined by the pre-set weight coefficient $\alpha$, the real time bandwidth data in the preceding pre-set time interval $S_{t-1}$ and $Y_t$.

The same data adjustment process may be performed on the historic bandwidth data stored in the bandwidth data storage subsystem. The client management device may store the adjusted real time bandwidth data in the bandwidth data storage subsystem. Alternatively, after the historic bandwidth data is obtained in step 201, the data adjustment process may be performed on the historic bandwidth data. In addition, the data adjustment process may be performed on the historic bandwidth data after the bandwidth data collection subsystem collects the bandwidth data and before the bandwidth data is stored in the bandwidth data storage subsystem. Alternatively, the data adjustment process may be performed by the bandwidth data storage subsystem after the bandwidth data is stored in the bandwidth data storage subsystem.

Step 204: based on the real time bandwidth data at each standard time point in a specified time interval and template bandwidth data of the regular bandwidth template in the specified time interval, determining whether the target client has the surge in bandwidth demand.

In one embodiment, after obtaining the real time bandwidth data in the pre-set time interval, the client management device may invoke the regular bandwidth template corresponding to each standard time point generated in step 202. Then, the client management device may determine the real time bandwidth data at each standard time point in the specified time interval and the template bandwidth data of the regular bandwidth template in the specified time interval. In this case, the specified time interval may be pre-configured by the CDN administrators to the time interval starting from the current time point and moving forward for a specified duration. The duration of the specified time interval is at least equal to the time interval of the standard time points. After that, the client management device may determine whether the target client has a bandwidth demand based on the determined real time bandwidth data at each standard time point and the template bandwidth data. Further, based on the determination result, the client management device may instruct the resource scheduling subsystem to allocate the bandwidth resources.

In one embodiment, the process of determining the surge in bandwidth demand in step 204 may include: calculating a sum of the real time bandwidth data at all the standard time points in the specified time interval, and calculating a sum of the template bandwidth data of the regular bandwidth template in the specified time interval; and based on a ratio of the sum of the real time bandwidth data over the sum of the template bandwidth data and a pre-set surge warning ratio or proportion, determining whether the client has the surge in bandwidth demand.

In one embodiment, after determining the real time bandwidth data in the specified time interval, the client management device may calculate the sum of the real time bandwidth data at all the standard time points in the specified time interval and calculate the sum of the template bandwidth data of the regular bandwidth template in the specified time interval. The regular bandwidth template only includes the template bandwidth data at the standard time points. As such, the sum of the real time bandwidth data and the sum of the template bandwidth data have a same amount of the data. After that, based on the sum of the real time bandwidth data, the sum of the template bandwidth data, and the pre-set surge warning ratio or proportion, the client management device may determine whether the target client has the surge in bandwidth demand.

In one embodiment, determining the surge in bandwidth demand may include multiple aspects such as current bandwidth data and peak template bandwidth data. Accordingly, the process may include: obtaining the peak template bandwidth data of the template bandwidth data and the current bandwidth data at the current time point; establishing a surge standard ratio through a ratio of the current bandwidth data over the peak template bandwidth data and the pre-set surge warning ratio or proportion; and if the ratio of the sum of the real time bandwidth data over the sum of the template bandwidth data is greater than the surge standard ratio and the current bandwidth data is greater than a pre-set surge bandwidth minimum value, determining that the target client currently has the surge in bandwidth demand.

In one embodiment, after determining the real time bandwidth data in the specified time interval, the client management device may obtain the peak template bandwidth data of the template bandwidth data and the current bandwidth data at the current time point. Then, the client management device may calculate the ratio of the current bandwidth data over the peak template bandwidth data and based on the proportion of the calculated ratio in the pre-set surge warning ratio, may establish the surge standard ratio. As such, the client management device may first determine whether the current bandwidth data is greater than the pre-set surge bandwidth minimum value. If true, the client management device may further determine whether the ratio of the sum of the real time bandwidth data over the sum of the template bandwidth data is greater than the surge standard ratio. If true, the client management device may determine that the target client currently has the surge in bandwidth demand. For illustrative purposes, the determination formula is given as:

$$\begin{cases} S_{t_0} > initialValue \\ S/_T > 0.5 * \left(1 - \dfrac{S_{t_0}}{peakbw}\right) + alpha \end{cases}$$

where $S_{t_0}$ is the current bandwidth data, initialValue is the surge bandwidth minimum value, $S/_T$ is the ratio of the sum of the real time bandwidth data S over the sum of the template bandwidth data $T$, $peakbw$ is the peak template bandwidth data, and $alpha$ is the surge warning ratio.

In one embodiment, after the surge in bandwidth demand has already occurred, the bandwidth data may be used to determine whether the surge in bandwidth demand is over. The process may include: after it is determined last time that the target client has the surge in bandwidth demand, if the ratio of the sum of the real time bandwidth data over the sum of the template bandwidth data is smaller than a pre-set surge warning dismissal ratio or proportion, or the current bandwidth data is smaller than the surge bandwidth minimum value, or the current bandwidth data is smaller than one half of the peak template bandwidth data, determining that the surge in bandwidth demand of the target client is over.

In the implementation, if it is determined last time that the target client has the surge in bandwidth demand, the client management device may use one of the following three approaches to determine whether the surge in bandwidth demand is over. In one approach, the ratio of the sum of the real time bandwidth data over the sum of the template bandwidth data is compared with the pre-set surge warning dismissal ratio. If the ratio of the sum of the real time bandwidth data over the sum of the template bandwidth data is smaller than the pre-set surge warning dismissal ratio, it indicates that the surge in bandwidth demand is over. In another approach, the current bandwidth data is compared with the surge bandwidth minimum value. If the current bandwidth data is smaller than the surge bandwidth minimum value, it indicates that the surge in bandwidth demand is over. In another approach, the current bandwidth data is compared with the peak template bandwidth data. If the current bandwidth data is smaller than one half of the peak template bandwidth data, it indicates that the surge in bandwidth demand is over. The above approaches may be summarized in the following formula:

$$\begin{cases} S/_T < beta \\ \dfrac{S_{t_0}}{peakbw} < 0.5 \\ S_{t_0} < initialValue \end{cases}$$

where *beta* is the surge warning dismissal ratio.

In one embodiment, all obtained real time bandwidth data may be simultaneously considered in determining the surge in bandwidth demand. Accordingly, after step 203 and before step 204, a following process may be added. The process includes: dividing the real time bandwidth data according to each standard time point; and updating and storing the real time bandwidth data at each standard time point in an ascending order by accumulating the real time bandwidth data at a preceding standard time point to the real time bandwidth data at the standard time point.

In one embodiment, after obtaining the real time bandwidth data in every pre-set time interval, the client management device may divide the real time bandwidth data according to each standard time point. Then, the real time bandwidth data at a preceding standard time point is accumulated to the real time bandwidth data at the standard time point to update the real time bandwidth data at the standard time point. The real time bandwidth data at each standard time point will be updated to include the real time bandwidth data at the preceding standard time point. As such, not only the real time bandwidth data at the current standard time point, but also all obtained real time bandwidth data may be included in determining the surge in bandwidth demand to timelier and more accurately recognize the surge in bandwidth demand. The same aggregation process may be performed on the historic bandwidth data stored in the bandwidth data storage subsystem. The client management device may store the updated real time bandwidth data in the bandwidth data storage subsystem. In addition, the aggregation process may be performed on the historic bandwidth data after the bandwidth data is collected by the bandwidth data collection subsystem and before the bandwidth data is stored in the bandwidth data storage subsystem. Alternatively, the aggregation process may be performed by the bandwidth data storage subsystem after the bandwidth data is stored in the bandwidth data storage subsystem.

In the embodiments of the present disclosure, the historic bandwidth data of the target client is periodically obtained at each standard time point in a plurality of historic cycles. The regular bandwidth template corresponding to each standard time point is generated based on the historic bandwidth data. The real time bandwidth data of the target client in every pre-set time interval is obtained. Based on the real time bandwidth data at each standard time point in the specified time interval and the template bandwidth data of the regular bandwidth template in the specified time interval, whether the target client has the surge in bandwidth demand is determined. As such, cyclical characteristics of the bandwidth usage of the target client is mined based on the big data analysis. The regular bandwidth templates are created for different clients at different time points. The latest real time bandwidth data in combination with the regular bandwidth templates are used to timelier and more accurately recognize the surges in bandwidth demand of the clients. Thus, the bandwidth resources are scheduled more effectively in response to the surges in bandwidth demand, and the overall service quality for the clients is ensured.

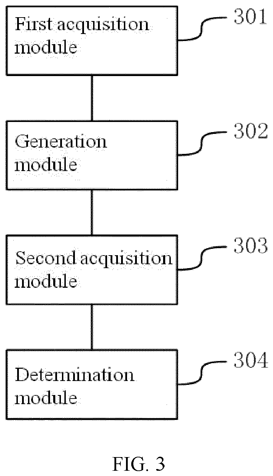

Based on the same technical concept, the present disclosure also provides an apparatus for recognizing a surge in bandwidth demand. As shown in FIG. 3, the apparatus includes: a first acquisition module 301 configured to periodically obtain historic bandwidth data of a target client at each standard time point in a plurality of historic cycles; a generation module 302 configured to generate a regular bandwidth template corresponding to each standard time point based on the historic bandwidth data; a second acquisition module 303 configured to obtain the real time bandwidth data of the target client in every pre-set time interval; and a determination module 304 configured to determine whether the target client has a surge in bandwidth demand based on the real time bandwidth data at each standard time point in the specified time interval and template bandwidth data of the regular bandwidth template in the specified time interval.

In one embodiment, the apparatus also includes a data interpolation module. If the real time bandwidth data obtained in any pre-set time interval misses the real time bandwidth data at a target time point, the data interpolation module is configured to use a linear interpolation algorithm to calculate the real time bandwidth data at the target time point based on the real time bandwidth data at time points adjacent to the target time point.

In one embodiment, the apparatus also includes a data smoothing module. Based on the real time bandwidth data obtained in a preceding pre-set time interval, the data smoothing module is configured to determine a bandwidth change rate of the real time bandwidth data obtained in a latest pre-set time interval. If the bandwidth change rate is greater than a pre-set change threshold and a count of consecutive abrupt bandwidth changes is smaller than a pre-set count threshold, the real time bandwidth data obtained in the latest pre-set time interval is updated to the real time bandwidth data obtained in the preceding pre-set time interval, and the count of the consecutive abrupt bandwidth changes is incremented by one.

If the bandwidth change rate is not greater than the pre-set change threshold, or the count of the consecutive abrupt bandwidth changes is not smaller than the pre-set count threshold, the real time bandwidth data obtained in the latest pre-set time interval is adjusted according to the real time bandwidth data obtained in the preceding pre-set time interval, and the count of the consecutive abrupt bandwidth changes is reset to zero.

In one embodiment, the generation module 302 is further configured to perform the following process. For every two historic cycles in the plurality of historic cycles, a sum of differences between the historic bandwidth data in the two historic cycles at all standard time points is determined to be a distance between the two historic cycles. Each historic cycle is an initial cluster. A single-linkage Hierarchical Clustering algorithm is used to gradually merge two clusters having a smallest distance. When the number of the historic cycles included in the merged cluster exceeds a pre-set number, the merged cluster is determined to be a target cluster and all the historic cycles included in the target cluster are determined to be target historic cycles. Based on averages of the historic bandwidth data in the target historic cycles at each standard time point, the regular bandwidth template corresponding to each standard time point is created.

In one embodiment, the determination module 304 is further configured to perform the following process.

A sum of the real time bandwidth data at all the standard time points in the specified time interval and a sum of the template bandwidth data of the regular bandwidth template in the specified time interval are calculated. Based on a ratio of the sum of the real time bandwidth data over the sum of the template bandwidth data and a pre-set surge warning ratio or proportion, whether the target client has the surge in bandwidth demand is determined.

In one embodiment, the determination module 304 is further configured to perform the following process. Peak template bandwidth data of the template bandwidth data and current bandwidth data at a current time point are obtained. A ratio of the current bandwidth data over the peak template bandwidth data and the pre-set surge warning ratio or proportion are used to establish a surge standard ratio. If the ratio of the sum of the real time bandwidth data over the sum of the template bandwidth data is greater than the surge standard ratio and the current bandwidth data is greater than a pre-set surge bandwidth minimum value, the target client is determined to have the surge in bandwidth demand.

In one embodiment, the apparatus further includes an auxiliary determination module configured to perform the following process. After the target client is determined in the last time to have the surge in bandwidth demand, if the ratio of the sum of the real time bandwidth data over the sum of the template bandwidth data is smaller than a pre-set surge warning dismissal ratio or proportion, or the current bandwidth data is smaller than the pre-set surge bandwidth minimum value, or the current bandwidth data is smaller than one half of the peak template bandwidth data, the surge in bandwidth demand of the target client is determined to be over.

In one embodiment, the apparatus further includes an updating module configured to perform the following process. The real time bandwidth data is divided according to each standard time point. The real time bandwidth data at a preceding standard time point is accumulated to the real time bandwidth data at the standard time point to update and store the real time bandwidth data at each standard time point in an ascending order.

In the embodiments of the present disclosure, the historic bandwidth data of the target client is periodically obtained at each standard time point in a plurality of historic cycles. The regular bandwidth template corresponding to each standard time point is generated based on the historic bandwidth data. The real time bandwidth data of the target client in every pre-set time interval is obtained. Based on the real time bandwidth data at each standard time point in the specified time interval and the template bandwidth data of the regular bandwidth template in the specified time interval, whether the target client has the surge in bandwidth demand is determined. As such, cyclical characteristics of the bandwidth usage of the target client is mined based on the big data analysis. The regular bandwidth templates are created for different clients at different time points. The latest real time bandwidth data in combination with the regular bandwidth templates are used to timelier and more accurately recognize the surges in bandwidth demand of the clients. Thus, the bandwidth resources are scheduled more effectively in response to the surges in bandwidth demand, and the overall service quality for the clients is ensured.

It should be noted that when recognizing the surge in bandwidth demand, the functional modules of the apparatus for recognizing the surge in bandwidth demand provided in the embodiments of the present disclosure are divided for illustrative purposes. In practical applications, the function allocations may be achieved by different functional modules according to actual requirements. That is, the internal structures of the apparatus may be divided into different functional modules to achieve all or part of the functions. In addition, the apparatus for recognizing the surge in bandwidth demand provided by the embodiments of the present disclosure and the method for recognizing the surge in bandwidth demand provided by the embodiments of the present disclosure are sharing the same technical concept. The implementation process of the apparatus may refer to the method embodiments and will not be repeated hereinafter.

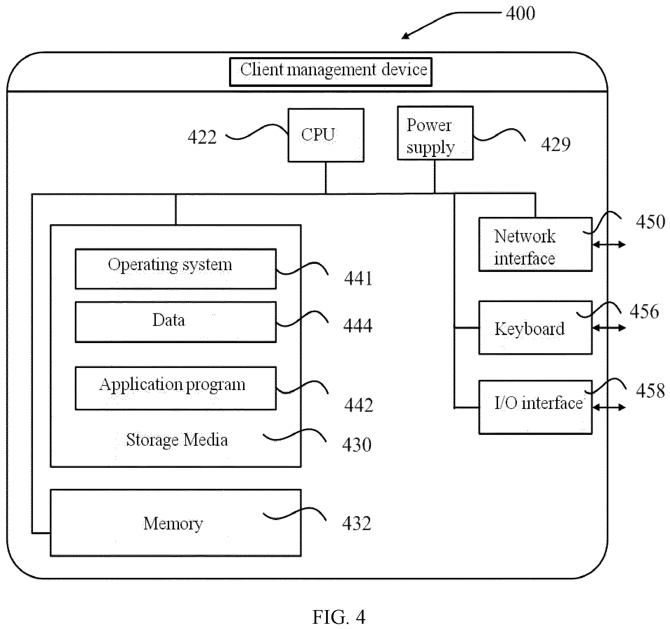

FIG. 4 illustrates a schematic diagram of an exemplary client management device according to disclosed embodiments of the present disclosure. As shown in FIG. 4, the client management device 400 may be considerably different depending on configuration or performance. The client management device 400 may include one or more central processing units (CPU) 422 (e.g., one or more processors) and memories 432, and one or more storage media 430 (e.g., one or more massive storage devices) configured to store application programs 442 or data 444. The memory 432 and the storage media 430 may be a volatile memory or a non-volatile memory. The application programs 442 stored in the storage media 430 may include one or more modules (not shown). Each module may include a plurality of instructions for the client management device 400. Further, in the client management device 400, the CPU 422 may be configured to communicate with the storage media 430 to execute the plurality of instructions stored in the storage media 430.

The client management device 400 may further include one or more power supplies 426, one or more wired or wireless network interfaces 450, one or more input output interfaces 458, one or more keyboards 456, and/or one or more operating systems 441, such as Windows Server, Mac OS X, Unix, Linux, FreeBSD, etc.

The client management device 400 may include the memory and one or more programs stored in the memory. The one or more programs configured to be executed by one or more processors include the instructions for recognizing the surge in bandwidth demand.

Those skilled in the art may appreciate that all or part of the steps in the embodiments of the present disclosure may be implemented in hardware or may be implemented by using programs to instruct relevant hardware. The program may be stored in a computer readable storage medium. The storage medium may include a read-only memory (ROM), a magnetic disk, or an optical disk.

It should be understood by those skilled in the art that the foregoing are merely certain preferred embodiments of the present disclosure and are not intended to limit the present invention. Without departing from the spirit and principles of the present disclosure, any modifications, equivalent substitutions, and improvements, etc. shall fall within the scope of the present disclosure.

## Claims

1. A method for recognizing a surge in bandwidth demand, comprising:

   periodically obtaining historic bandwidth data of a target client at each standard time point in a plurality of historic cycles;
   generating a regular bandwidth template corresponding to each standard time point based on the historic bandwidth data;
   obtaining real time bandwidth data of the target client in every pre-set time interval; and
   based on the real time bandwidth data at each standard time point in a specified time interval and template bandwidth data of the regular bandwidth template in the specified time interval, determining whether the target client has the surge in bandwidth demand.

2. The method of claim 1, wherein after obtaining the real time bandwidth data of the target client in every pre-set time interval, the method further includes:
   if the real time bandwidth data obtained in any pre-set time interval misses the real time bandwidth data at a target time point, using a linear interpolation algorithm to calculate the real time bandwidth data at the target time point based on the real time bandwidth data at time points adjacent to the target time point.

3. The method of claim 1, wherein after obtaining the real time bandwidth data of the target client in every pre-set time interval, the method further includes:

   determining a bandwidth change rate of the real time bandwidth data obtained in a latest pre-set time interval based on the real time bandwidth data obtained in a preceding pre-set time interval;
   if the bandwidth change rate is greater than a pre-set change threshold and a count of consecutive abrupt bandwidth changes is smaller than a pre-set count threshold, updating the real time bandwidth data obtained in the latest pre-set time interval with the real time bandwidth data obtained in the preceding pre-set time interval and incrementing the count of the consecutive abrupt bandwidth changes by one; and
   if the bandwidth change rate is not greater than the pre-set change threshold or the count of the consecutive abrupt bandwidth changes is not smaller than the pre-set count threshold, adjusting the real time bandwidth data obtained in the latest pre-set time interval according to the real time bandwidth data obtained in the preceding pre-set time interval and resetting the count of the consecutive abrupt bandwidth changes to zero.

4. The method of claim 1, wherein generating the regular bandwidth template corresponding to each standard time point based on the historic bandwidth data includes:

   for every two historic cycles in the plurality of historic cycles, determining a sum of differences between the historic bandwidth data in the two historic cycles of all standard time points to be a distance between the two historic cycles;
   each historic cycle being an initial cluster, using a single-linkage Hierarchical Clustering algorithm to gradually merge two clusters having a smallest distance;
   a target cluster being a merged cluster when the number of the historic cycles included in the merged cluster exceeds a pre-set number, determining all the historic cycles included in the target cluster to be target historic cycles; and
   based on averages of the historic bandwidth data in the target historic cycles at each standard time point, creating the regular bandwidth template corresponding to each standard time point.

5. The method of claim 1, wherein determining whether the target client has the surge in bandwidth demand based on the real time bandwidth data in the specified time interval at each standard time point and the template bandwidth data of the regular bandwidth template in the specified time interval includes:

   calculating a sum of the real time bandwidth data at all the standard time points in the specified time interval, and calculating a sum of the template bandwidth data of the regular bandwidth template in the specified time interval; and
   based on a ratio of the sum of the real time bandwidth data over the sum of the template bandwidth data and a pre-set surge warning ratio or proportion, determining whether the client has the surge in bandwidth demand.

**6.** The method of claim 5, wherein determining whether the client has the surge in bandwidth demand based on the ratio of the sum of the real time bandwidth data over the sum of the template bandwidth data and the pre-set surge warning ratio includes:

obtaining peak template bandwidth data of the template bandwidth data and current bandwidth data at a current time point;
establishing a surge standard ratio through a ratio of the current bandwidth data over the peak template bandwidth data and the pre-set surge warning ratio or proportion; and
if the ratio of the sum of the real time bandwidth data over the sum of the template bandwidth data is greater than the surge standard ratio, and the current bandwidth data is greater than a pre-set surge bandwidth minimum value, determining that the target client currently has the surge in bandwidth demand.

**7.** The method of claim 6, further including:
after it is determined last time that the target client has the surge in bandwidth demand, if the ratio of the sum of the real time bandwidth data over the sum of the template bandwidth data is smaller than a pre-set surge warning dismissal ratio or proportion, or the current bandwidth data is smaller than the pre-set surge bandwidth minimum value, or the current bandwidth data is smaller than one half of the peak template bandwidth data, determining that the surge in bandwidth demand of the target client is over.

**8.** The method of any of claims 1-7, wherein after obtaining the real time bandwidth data of the target client in every pre-set time interval, the method further includes:

dividing the real time bandwidth data according to each standard time point; and
updating and storing the real time bandwidth data at each standard time point in an ascending order by accumulating the real time bandwidth data at a preceding standard time point to the real time bandwidth data at the standard time point.

**9.** An apparatus for recognizing a surge in bandwidth demand, comprising:

a first acquisition module configured to periodically obtain historic bandwidth data of a target client at each standard time point in a plurality of historic cycles;
a generation module configured to generate a regular bandwidth template corresponding to each standard time point based on the historic bandwidth data;

a second acquisition module configured to obtain real time bandwidth data of the target client in every pre-set time interval; and
a determination module configured to determine whether the target client has the surge in bandwidth demand based on the real time bandwidth data at each standard time point in a specified time interval and template bandwidth data of the regular bandwidth template in the specified time interval.

**10.** The apparatus of claim 9, further including:
a data interpolation module configured to:
if the real time bandwidth data obtained in any pre-set time interval misses the real time bandwidth data at a target time point, use a linear interpolation algorithm to calculate the real time bandwidth data at the target time point based on the real time bandwidth data at time points adjacent to the target time point.

**11.** The apparatus of claim 9, further including:
a data smoothing module configured to:

determine a bandwidth change rate of the real time bandwidth data obtained in a latest pre-set time interval based on the real time bandwidth data obtained in a preceding pre-set time interval;
if the bandwidth change rate is greater than a pre-set change threshold and a count of consecutive abrupt bandwidth changes is smaller than a pre-set count threshold, update the real time bandwidth data obtained in the latest pre-set time interval with the real time bandwidth data obtained in the preceding pre-set time interval and increment the count of the consecutive abrupt bandwidth changes by one; and
if the bandwidth change rate is not greater than the pre-set change threshold or the count of the consecutive abrupt bandwidth changes is not smaller than the pre-set count threshold, adjust the real time bandwidth data obtained in the latest pre-set time interval according to the real time bandwidth data obtained in the preceding pre-set time interval and reset the count of the consecutive abrupt bandwidth changes to zero.

**12.** The apparatus of claim 9, wherein the generation module is further configured to:

for every two historic cycles in the plurality of historic cycles, determine a sum of differences between the historic bandwidth data in the two historic cycles of all standard time points to be a distance between the two historic cycles;
each historic cycle being an initial cluster, use a single-linkage Hierarchical Clustering algorithm to gradually merge two clusters having a smallest distance;

a target cluster being a merged cluster when the number of the historic cycles included in the merged cluster exceeds a pre-set number, determine all the historic cycles included in the target cluster to be target historic cycles; and based on averages of the historic bandwidth data in the target historic cycles at each standard time point, create the regular bandwidth template corresponding to each standard time point.

13. The apparatus of claim 9, wherein the determination module is further configured to:

calculate a sum of the real time bandwidth data at all the standard time points in the specified time interval, and calculate a sum of the template bandwidth data of the regular bandwidth template in the specified time interval; and based on a ratio of the sum of the real time bandwidth data over the sum of the template bandwidth data and a pre-set surge warning ratio or proportion, determine whether the client has the surge in bandwidth demand.

14. The apparatus of claim 13, wherein the determination module is further configured to:

obtain peak template bandwidth data of the template bandwidth data and current bandwidth data at a current time point; establish a surge standard ratio through a ratio of the current bandwidth data over the peak template bandwidth data and the pre-set surge warning ratio or proportion; and if the ratio of the sum of the real time bandwidth data over the sum of the template bandwidth data is greater than the surge standard ratio, and the current bandwidth data is greater than a pre-set surge bandwidth minimum value, determine that the target client currently has the surge in bandwidth demand.

15. The apparatus of claim 14, further including:

an auxiliary determination module configured to: after it is determined last time that the target client has the surge in bandwidth demand, if the ratio of the sum of the real time bandwidth data over the sum of the template bandwidth data is smaller than a pre-set surge warning dismissal ratio or proportion, or the current bandwidth data is smaller than the pre-set surge bandwidth minimum value, or the current bandwidth data is smaller than one half of the peak template bandwidth data, determine that the surge in bandwidth demand of the target client is over.

16. The apparatus of any of claims 9-15, further including:

an updating module configured to:

divide the real time bandwidth data according to each standard time point; and update and store the real time bandwidth data at each standard time point in an ascending order by accumulating the real time bandwidth data at a preceding standard time point to the real time bandwidth data at the standard time point.

17. A client management device, comprising:

a processor; and a memory configured to store at least one instruction, at least one section of program, a code set, or an instruction set, wherein the at least one instruction, the at least one section of program, the code set, or the instruction set stored in the memory are loaded and executed by the processor to implement the method for recognizing the surge in bandwidth demand of any of claims 1-8.

18. A computer readable storage medium, wherein: the storage medium stores at least one instruction, at least one section of program, a code set, or an instruction set, wherein the at least one instruction, the at least one section of program, the code set, or the instruction set are loaded and executed by a processor to implement the method for recognizing the surge in bandwidth demand of any of claims 1-8.

FIG. 1

201

Periodically obtaining historic bandwidth data of a target client at each standard time point in a plurality of historic cycles

202

Generating a regular bandwidth template corresponding to each standard time point based on the historic bandwidth data

203

Obtaining real time bandwidth data of the target client in every pre-set time interval

204

Based on the real time bandwidth data at each standard time point in a specified time interval and template bandwidth data of the regular bandwidth template in the specified time interval, determining whether the target client has a surge in bandwidth demand

FIG. 2

First acquisition module — 301

Generation module — 302

Second acquisition module — 303

Determination module — 304

FIG. 3

FIG. 4

## INTERNATIONAL SEARCH REPORT

| International application No. |
| --- |
| **PCT/CN2018/119599** |

**A. CLASSIFICATION OF SUBJECT MATTER**

H04L 12/24(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

WPI, EPODOC, CNKI, CNPAT, IEEE: 带宽, 需求, 预测, 预估, 估计, 估算, 突发, 周期, 历史, 时刻, 时段, 实时, 比较, 判断, bandwidth, demand, forecast, estimate, burst, cycle, history, time, real time, compar+, judg+

**C. DOCUMENTS CONSIDERED TO BE RELEVANT**

| Category* | Citation of document, with indication, where appropriate, of the relevant passages | Relevant to claim No. |
| --- | --- | --- |
| X | CN 106557401 A (INSTITUTE OF COMPUTING TECHNOLOGY, CHINA ACADEMY OF RAILWAY SCIENCES ET AL.) 05 April 2017 (2017-04-05) description, paragraphs [0058]-[0118] | 1-18 |
| A | CN 101448321 A (BEIJING UNIVERSITY OF POSTS AND TELECOMMUNICATIONS) 03 June 2009 (2009-06-03) entire document | 1-18 |
| A | CN 103256859 A (SHANGHAI AEROSPACE MEASUREMENT CONTROL & COMMUNICATION INSTITUTE) 21 August 2013 (2013-08-21) entire document | 1-18 |
| A | CN 105827472 A (HUAWEI TECHNOLOGIES CO., LTD.) 03 August 2016 (2016-08-03) entire document | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **01 July 2019** | **22 July 2019** |

| Name and mailing address of the ISA/CN | Authorized officer |
| --- | --- |
| **National Intellectual Property Administration, PRC (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/119599**

| Patent document cited in search report | | | Publication date (day/month/year) | Patent family member(s) | | | Publication date (day/month/year) |
|---|---|---|---|---|---|---|---|
| CN | 106557401 | A | 05 April 2017 | None | | | |
| CN | 101448321 | A | 03 June 2009 | None | | | |
| CN | 103256859 | A | 21 August 2013 | None | | | |
| CN | 105827472 | A | 03 August 2016 | US | 2017195240 | A1 | 06 July 2017 |
| | | | | WO | 2016107180 | A1 | 07 July 2016 |
| | | | | EP | 3176981 | A1 | 07 June 2017 |

Form PCT/ISA/210 (patent family annex) (January 2015)